# EUROPÄISCHE PATENTSCHRIFT

(11) **EP 2 076 984 B1**
(45) Veröffentlichungstag und Bekanntmachung des Hinweises auf die Patenterteilung: **29.12.2010**
(21) Anmeldenummer: 07820586.1
(22) Anmeldetag: 26.09.2007
(51) Int. Cl.: H04J 3/10

(54) **Verfahren sowie Schaltungsanordnung zur Erkennung von kanalselektiven Fehlern**
Method and Circuit arrangement for channel selective error detection
Procédé et circuit de détection d'erreurs associées à des voies de transmission differentes

(30) Priorität: 06.10.2006 DE 102006047396
(43) Veröffentlichungstag der Anmeldung: 08.07.2009
(73) Patentinhaber: Robert Bosch GmbH, 70442 Stuttgart (DE)
(72) Erfinder: WENZEL-BENNER, Christian, 71717 Beilstein (DE); BARTEL, Markus, 74232 Abstatt (DE); KAHNERT, Thomas, 71282 Hemmingen (DE); SAUTTER, Peter, 74348 Lauffen (DE); GEBAUER, Carsten, 71034 Boeblingen (DE); TSCHENTSCHER, Harald, 71723 Grossbottwar (DE); FEHRENBACHER, Berthold, 71706 Markgroeningen (DE); SCHAEFER, Achim, 71723 Grossbottwar (DE); KOERNER, Gotthilf, 71287 Weissach (DE); FREY, Andreas, 82234 Wessling (DE); BINDER, Helmut, 74172 Neckarsulm (DE); STOEHR, Bernd, 74343 Sachsenheim (DE)
(86) Internationale Anmeldenummer: PCT/EP2007/060191
(87) Internationale Veröffentlichungsnummer: WO 2008/043666

(56) Entgegenhaltungen:
- EP-A- 1 111 826
- DE-A1- 3 128 811
- DE-A1- 4 321 014

## Beschreibung

Die Erfindung betrifft eine Schaltungsanordnung, die einen Schaltkreis sowie eine Recheneinheit aufweist sowie ein Verfahren zur Verarbeitung von Daten .

### Stand der Technik

Bei Kfz-Anwendungen werden innerhalb eines Steuergeräts Drehzahlfühlersignale von einem applikationsspezifischen integrierten Schaltkreis des Steuergeräts oder eines entsprechenden Systems zu einem Mikrocontroller (µC) übertragen und über Timer-Eingänge in dem Mikrocontroller eingelesen. Da es sich bspw. in ABS- oder ESP-Einrichtungen bzw. -Systemen bei den Drehzahlfühlersignalen um sicherheitstechnisch relevante Signale handelt, ist es erforderlich, eine Verfälschung derartiger Signale durch Fehler, die bei der Übertragung und der Auswertung entstehen können, in dem Mikrocontroller zu entdecken.

Diesbezüglich ist in einer Zwei-Rechner-Einrichtung vorgesehen, dass beide Rechner jeweils dieselben Signale einlesen und anschließend vergleichen. Hierbei können alle Fehler, die bei der Auswertung entstehen, durch den Mikrocontroller entdeckt werden. Allerdings ist es hierbei nicht möglich, Fehler, die bei der Übertragung entstanden sind, zu entdecken. Die letztgenannten Fehler können durch Überprüfung von Plausibilitäten der in der Regel vier Drehzahlfühlersignale untereinander entdeckt werden. Daher ist es dennoch erforderlich, zwei Rechner einzusetzen, was eine Verdoppelung der Kosten bedeutet.

Bei sogenannten Ein-Rechner-Einrichtungen bzw. Ein-Rechner-Systemen ist zur Überwachung einer Signalverfälschung vorgesehen, in dem anwendungsspezifischen integrierten Schaltkreis (ASIC) des Ein-Rechner-Systems zusätzlich einen Auswertealgorithmus bereitzustellen, der die Drehzahlfühlersignale in eine Geschwindigkeit umwandelt und filtert. Hierbei können alle Fehler in der Timereinheit und bei der Übertragung erkannt werden. Durch die unterschiedlichen Algorithmen in dem Rechner und dem anwendungsspezifischen integrierten Schaltkreis ist allerdings eine relativ lange Zeit zur Filterung und eine große Toleranz für das Erkennen der Fehler erforderlich, um fehlerbedingte Abschaltungen zu vermeiden. Das System erfordert zudem die Auswertung mittels des Auswertealgorithmus, wozu zusätzliche Chipfläche auf einem Chip des anwendungsspezifischen integrierten Schaltkreises benötigt wird.

Ein Verfahren und eine Vorrichtung zur Datenübertragung sind aus der Druckschrift DE 102 28 905 A1 bekannt. Hierbei erfolgt die serielle Datenübertragung zwischen einem ersten und einem zweiten Teilnehmer, wobei der erste Teilnehmer wenigstens zwei Signale aus zwei Signalpfaden unidirektional zu dem zweiten Teilnehmer überträgt. Zudem ist in jedem Teilnehmer ein Schieberegister vorgesehen, wobei zwei Signalpfade des ersten Teilnehmers parallel in das Schieberegister geführt werden und die Datenübertragung zu dem zweiten Teilnehmer durch eine automatische Taktung der Schieberegister erfolgt.

Ein weiteres Verfahren sowie Vorrichlung wird in EP 1111826 beschrieben.

### Offenbarung der Erfindung

Die Erfindung betrifft eine Schaltungsanordnung, die einen Schaltkreis sowie eine Recheneinheit aufweist. In der Schaltungsanordnung sind der Schaltkreis und die Recheneinheit zur Übermittlung einer Anzahl von Signalen, die als Informationssignale ausgebildet sind, über mehrere Leitungen miteinander verbunden. Außerdem weist der Schaltkreis einen Multiplexer zum Zusammenschalten von Signalen auf, wobei dieser Multiplexer über eine Zusatzleitung mit der Recheneinheit verbunden ist.

Mit dieser Erfindung ist es möglich, eine Überwachung einer Übertragung der Signale und/oder einer Auswertung in einer Recheneinheit und demnach in einem Steuergerät zu entwickeln. Die erfindungsgemäße Schaltungsanordnung ermöglicht eine genauere Überwachung sowie ein deutlich schnelleres Erkennen der Fehler und ist kostengünstiger als die im Stand der Technik voranstehend genannten Zwei-Rechner- oder Ein-Rechner-Einrichtungen. Die Fehler sind insbesondere im Vergleich zu der Ein-Rechner- Einrichtung schneller und präziser zu erkennen.

Es ist vorgesehen, dass für jedes zu übertragende Informationssignal der Schaltkreis und die Recheneinheit mit jeweils einer Leitung verbunden sind. Demnach weist die Schaltungsanordnung eine der Anzahl der Informationssignale entsprechende Anzahl von Leitungen auf. Des weiteren ist typischerweise innerhalb des Schaltkreises jede Leitung über eine Abzweigleitung mit einem Kanal des Multiplexers verbunden. Somit kann jedes als Informationssignal ausgebildete Signal über die eigene Leitung von dem Schaltkreis zu der Recheneinheit übertragen werden. Zusätzlich kann jedes Signal über die Abzweigleitung jeweils einem Kanal des Multiplexers zugeführt werden, wobei die Informationssignale in dem Multiplexer zusammengeschaltet und gemeinsam über die Zusatzleitung ausgehend von dem Multiplexer innerhalb des Schaltkreises zu der Recheneinheit, insbesondere einem als Timereingang oder Analogeingang ausgebildeten Eingang der Recheneinheit, übertragen werden.

Bei einer Variante der Erfindung ist vorgesehen, dass der Multiplexer noch weitere Kanäle aufweist, die zum Zusammenschalten weiterer Signale vorgesehen sind. Derartige /r weitere Signale können dann mit den Informationssignalen zusammengeschaltet und über die Zusatzleitung der Recheneinheit übermittelt werden.

Gemäß der Erfindung sind der Schaltkreis und die Recheneinheit zusätzlich mit einer Referenzleitung zur Übermittlung eines als Referenzsignal ausgebildeten Signals miteinander verbunden. Dieses Referenzsignal ist ebenfalls mit den Informationssignalen über den Multiplexer zusammenzuschalten und gemeinsam über die Zusatzleitung zu der Recheneinheit zu übertragen.

Die Erfindung betrifft zudem ein Verfahren zur Bearbeitung von Signalen. Bei diesem Verfahren wird eine Anzahl von Signalen, die als Informationssignale ausgebildet sind, zwischen einem Schaltkreis und einer Recheneinheit, die über mehrere Leitungen miteinander verbunden sind, übertragen. Bei diesem Verfahren werden die Signale in einem Multiplexer des Schaltkreises zusammengeschaltet und über eine Zusatzleitung zu der Recheneinheit übertragen.

Bei einer Ausgestaltung des Verfahrens werden die Signal insbesondere durch den Multiplexer und/oder den Timereingang bzw. Analogeingang auf Fehler überwacht. Bei einer Übertragung und Auswertung entstehende Fehler können durch das Verfahren erkannt werden.

Hierzu werden die Signale, insbesondere die Informationssignale, durch den Multiplexer zusammengeschaltet und über die Zusatzleitung übermittelt. Zusätzlich werden mindestens ein als Referenzsignal ausgebildetes Signal und mindestens ein weiteres Signal, insbesondere ein Informationssignal, durch den Multiplexer zusammengeschaltet und über die Zusatzleitung zu der Recheneinheit übermittelt werden. Es ist ebenfalls möglich, dass ein Potential des Schaltkreises, bspw. eine Referenzspannung oder die Masse, und mindestens ein weiteres Signal, insbesondere eines der Informationssignale, durch den Multiplexer zusammengeschaltet und über die Zusatzleitung übermittelt werden.

Zur Kontrolle und damit in der Regel zur Steuerung des Verfahrens werden die Kanäle des Multiplexers über eine serielle periphere Schnittstelle ausgewählt.

Es ist vorgesehen, dass mindestens ein Schritt oder sämtliche Schritte des erfindungsgemäßen Verfahrens durch das erfindungsgemäße Steuergerät und/oder die erfindungsgemäße Schaltungsanordnung durchgeführt werden können. Des weiteren können einzelne Funktionen der Schaltungsanordnung oder einzelner Komponenten der Schaltungsanordnung, in der Regel des Schaltkreises und der Recheneinheit sowie des Multiplexer, als weitere Schritte des erfindungsgemäßen Verfahrens angesehen werden.

In Ausgestaltung werden als Drehzahlfühlersignale ausgebildete Informationssignale von einem als ASIC ausgebildeten anwendungsspezifischen integrierten Schaltkreis zu der als Mikrocontroller (µC) ausgebildeten Recheneinheit übertragen. Derartige Drehzahlfühlersignale werden an den typischerweise vier Rädern eines Kraftfahrzeugs bei Betrieb durch geeignete Sensoren erfasst. Dabei handelt es sich also um ein Drehzahlfühlersignal des vorderen linken Rads (DFVL), ein Drehzahlfühlersignal des hinteren rechten Rads (DFHR), ein Drehzahlfühlersignal des vorderen rechten Rads (DFVR) und ein Drehzahlfühlersignal des hinteren linken Rads (DFHR). Diese Informations- und somit Drehzahlfühlersignale werden über Eingänge eines sogenannten Timers in dem Mikrocontroller eingelesen. Des weiteren werden bei einer Realisierung der Erfindung die Drehzahlfühlersignale in einzelnen Kanälen des Multiplexers zugeführt, zusammengeschaltet und ebenfalls über die Eingänge des Timers zu dem Mikrocontroller übertragen. Somit kann eine Verfälschung der Informationssignale durch Fehler bei der Übertragung und der Auswertung in dem Timer entdeckt werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

### Kurze Beschreibung der Zeichnungen

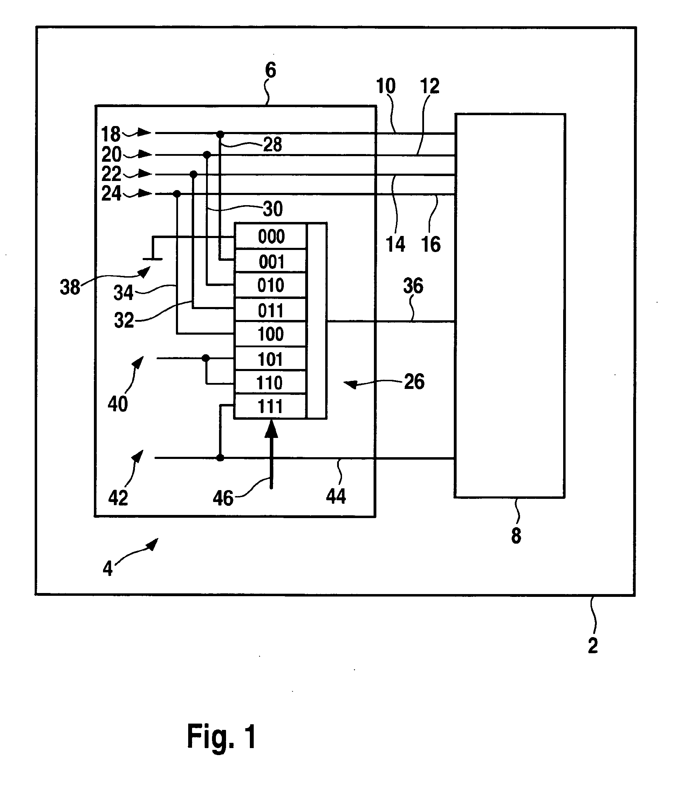

- Figur 1: zeigt in schematischer Darstellung eine Ausführungsform eines erfindungsge- mäßen Steuergeräts mit einer Ausführungsform einer erfindungsgemäßen Schaltungsanordnung.

### Ausführungsform der Erfindung

Die Erfindung ist anhand einer Ausführungsform in der Zeichnung schematisch dargestellt und wird im Folgenden unter Bezugnahme auf die Zeichnung ausführlich beschrieben.

Figur 1 zeigt in schematischer Darstellung eine Ausführurigsform eines erfindungsgemäßen Steuergeräts 2, das eine Ausführungsform einer erfindungsgemäßen Schaltungsanordnung 4 umfasst. Die Schaltungsanordnung 4 umfasst wiederum einen Schaltkreis 6 und eine in der vorliegenden Ausführungsform als Mikrocontroller ausgebildete Recheneinheit 8. Der Schaltkreis 6 ist hier über vier Leitungen 10, 12, 14, 16, die hier als Drehzahlfühlerleitungen ausgebildet sind, mit Eingängen eines Timers der Recheneinheit 8 verbunden. Über diese Leitungen 10, 12, 14, 16 werden bei Betrieb des Steuergeräts 2 Informationssignale 18, 20, 22, 24 ausgehend von dem Schaltkreis 6 zu der Recheneinheit 8 übertragen. Hierbei wird über eine erste Leitung 10 ein Informationssignal 18, das bei einem vorderen linken Rad eines Fahrzeugs (DFVL) erfasst wird, übertragen. Über eine zweite Leitung 12 wird ein Informationssignal 20, das bei dem hinteren rechten Rad eines Fahrzeugs erfasst wird (DFHR), übertragen. Ein drittes Informationssignal 22 für ein vorderes rechtes Rad des Fahrzeugs (DFVR) wird über eine dritte Leitung 14 zu der Recheneinheit 8 übertragen. Des weiteren ist vorgesehen, dass ein viertes Informationssignal 24 eines hinteren linken Rads des Fahrzeugs (DFHL) über eine vierte Leitung 16 übertragen wird.

Der Schaltkreis 6 der Schaltungsanordnung 4 weist einen Multiplexer 26 auf, der in dieser Ausführungsform als 3-Bit Multiplexer 26 ausgebildet ist, wobei einzelne Kanäle dieses Multiplexers 26 mit binären Zahlenkombinationen "000", "001", "010", "011", "100", "101", "110" und "111" bezeichnet sind. Entlang jeder der Leitungen 10, 12, 14, 16 ist eine Abzweigleitung 28, 30, 32, 34 angeschlossen. Somit ist es möglich, das erste Informationssignal 18 (DFVL) über eine erste Abzweigungsleitung 28 dem mit "001" gekennzeichneten Kanal des Multiplexers 26 zu übermitteln. Das zweite Informationssignal 20 ist über eine zweite Abzweigungsleitung 30 dem mit "010" bezeichneten Kanal des Multiplexers 26 zu übermitteln. Entsprechend wird das dritte Informationssignal 22 (DFVR) über eine dritte Abzweigungsleitung 32 dem mit "011" bezeichneten Kanal des Multiplexers 26 zugeführt. Das vierte Informationssignal 24 (DFHL) wird über die vierte Abzweigungsleitung 34 zu dem mit "100" bezeichneten Kanal des Multiplexers 26 übertragen. Mit dem Multiplexer werden die vier als Drehzahlfühlersignale ausgebildeten Informationssignale 18, 20, 22, 24 zusammengeschaltet und über eine Zusatzleitung 36 dem Timer und somit der Recheneinheit 8 übermittelt.

Folglich ist es möglich, eine Übertragung der hier als Informationssignale 18, 20, 22, 24 ausgebildeten Signale zu überwachen sowie auszuwerten und Fehler der Informationssignale 18, 20, 22, 24 zu entdecken.

Der mit "000" bezeichnete Kanal des Multiplexers 26 ist über eine Übertragungsleitung mit Masse 38 des Schaltkreises 6 verbunden. Ein Potential 40 des Schaltkreises 6 ist über weitere Übertragungsleitungen mit den beiden als "101" und "110" bezeichneten Kanälen des Multiplexers 26 verbunden. In vorliegender Ausführungsform weist das Potential eine Spannung von 3,3 V auf. Ein als Referenzsignal 42 vorgesehenes Signal ist über eine Übertragungsleitung einerseits mit dem als "111" gekennzeichneten Kanal des Multiplexers 26 zu übermitteln. Andererseits ist eine Referenzleitung 44 vorgesehen, mit der dieses Referenzsignal 42 über eine Referenzleitung der Recheneinheit 8 zu übermitteln ist. Zur Auswahl eines der Kanäle "000", "001" "010", "011", "100", "101", "110", "111" ist eine serielle periphere Schnittstelle 46 vorgesehen.

Mit der hier gezeigten Schaltungsanordnung 4, die den Schaltkreis 6, sowie die Recheneinheit 8 aufweist, kann eine Anzahl von Signalen, die hier als Informationssignale 18, 20, 22, 24 ausgebildet sind, über die Leitungen 10, 12, 14, 16 von dem Schaltkreis 6 zu der Recheneinheit 8 übertragen werden. Zudem können diese Informationssignale 18, 20, 22 ,24 über den Multiplexer 26 zusammengeschaltet und über die Zusatzleitung 16 zu der Recheneinheit 8 übertragen werden.

Durch das Referenzsignal 42 können generelle Fehler in einem Timer, die auf alle Kanäle "000", "001", "010", "011", "100", "101", "110", "111" wirken, sehr schnell erkannt werden. Ein Anschalten der einzelnen Informationssignale 18, 20, 22, 24 auf die Zusatzleitung 36 über den Multiplexer 26 führt zu einem Erkennen kanalselektiver Fehler in dem Timer und auf dem aus den Leitungen 10, 12, 14, 16 gebildeten Übertragungsweg der Schaltungsanordnung 4.

Die Auswahl des jeweiligen Kanals "000", "001", "010", "011", "100", "101", "110", "111" erfolgt in der Regel über die serielle periphere Schnittstelle 46. Eine derartige Auswahl ist jedoch auch auf einem anderen Weg denkbar.

## Patentansprüche

1. Verfahren zur Überwachung von Informationssignalen (18, 20, 22, 24) auf Fehler, bei dem die Informationssignale (18, 20, 22, 24) zwischen einem Schaltkreis (6) und einer Recheneinheit (8), die über Leitungen (10, 12, 14, 16) miteinander verbunden sind, übertragen werden, und bei dem die Informationssignale (18, 20, 22, 24) jeweils an einen Kanal (001, 010, 011, 100) eines Multiplexers (26) des Schaltkreises übermittelt, in dem Multiplexer (26) zusammengeschaltet und über eine Zusatzleitung (36) zu der Recheneinheit (8) übertragen werden, **dadurch gekennzeichnet, dass** die Informationssignale (18, 20, 22, 24) zum Erkennen von kanalselektiven Fehlern sowie Fehlern auf einem durch die Leitungen (10, 12, 14, 16) gebildeten Übertragungsweg durch den Multiplexer (26) zusammengeschaltet und über die Zusatzleitung (36) an die Recheneinheit übermittelt werden (8) und dass zur Erkennung von Fehlern, die auf alle Kanäle (001, 010, 011, 100) des Multiplexers (26) wirken, ein Referenzsignal (42) an einen weiteren Kanal (111) des Multiplexers (26) übermittelt und über die Zusatzleitung (36) zu der Recheneinheit (8) übertragen wird, sowie das Referenzsignal (42) über eine Referenzleitung (44) an die Recheneinheit (8) übermittelt wird.

2. Verfahren nach Anspruch 1, **dadurch gekennzeichnet, dass** das Referenzsignal (42) und mindestens ein weiteres Signal durch den Multiplexer (26) zusammengeschaltet und über die Zusatzleitung (36) übermittelt werden.

3. Verfahren nach Anspruch 1, **dadurch gekennzeichnet, dass** ein Potential des Schaltkreises (6) und mindestens ein weiteres Signal durch den Multiplexer (26) zusammengeschaltet und über die Zusatzleitung (36) übermittelt werden.

4. Verfahren nach einem der vorangegangenen Ansprüche , **dadurch gekennzeichnet, dass** die Kanäle (0001, 010, 011, 100) des Multiplexers (26) über eine serielle Schnittstelle (46) ausgewählt werden.

5. Schaltungsanordnung, die einen Schaltkreis (6) sowie eine Recheneinheit (8) aufweist, bei der der Schaltkreis (6) und die Recheneinheit (8) zur Übermittlung einer Anzahl von Informationssignalen (18, 20, 22, 24) über mehrere Leitungen (10, 12, 14, 16) miteinander verbunden sind, und bei der der Schaltkreis (6) einen Multiplexer (26) zum Zusammenschalten von Signalen aufweist, wobei dieser Multiplexer (26) über eine Zusatzleitung (36) mit der Recheneinheit (8) verbunden ist, wobei die Schaltungsanordnung für jedes zu übertragende Informationssignal (18, 20, 22, 24) eine Leitung (10, 12, 14, 16) aufweist, wobei jeweils eine Leitung (10, 12, 14, 16) über eine Abzweigeleitung (28, 30, 32, 34) mit einem Kanal des Multiplexers (26) verbunden ist, **dadurch gekennzeichnet, dass** der Schaltkreis (6) und die Recheneinheit (8) mit einer Referenzleitung (44) zur Übermittlung eines als Referenzsignal (42) ausgebildeten Signals miteinander verbunden sind und dass die Recheneinheit Mittel aufweist, die Informationssignale aufgrund der durch den Multiplexer (26) zusammengeschalteten Informationssignale (18, 20, 22, 24) auf kanalselektive Fehler sowie auf Fehler auf einem durch die Leitungen (10, 12, 14, 16) gebildeten Übertragungsweg zu überwachen und aufgrund des über die Referenzleitung (44) an die Recheneinheit (8) übermittelten Referenzsignals (42) Fehler zu erkennen, die auf alle Kanäle (001, 010, 011, 100) des Multiplexers (26) wirken.

## Claims

1. Method for monitoring information signals (18, 20, 22, 24) for errors, in which the information signals (18, 20, 22, 24) are transmitted between a circuit (6) and a computation unit (8) which are connected to one another via lines (10, 12, 14, 16), and in which the information signals (18, 20, 22, 24) are each transmitted to a channel (001, 010, 011, 100) of a multiplexer (26) in the circuit, are connected together in the multiplexer (26) and are transmitted to the computation unit (8) via an additional line (36), **characterized in that**, in order to detect channel-selective errors and errors on a transmission path formed by the lines (10, 12, 14, 16), the information signals (18, 20, 22, 24) are connected together by the multiplexer (26) and are transmitted to the computation unit (8) via the additional line (36), and **in that**, in order to detect errors which act on all channels (001, 010, 011, 100) of the multiplexer (26), a reference signal (42) is transmitted to a further channel (111) of the multiplexer (26) and is transmitted to the computation unit (8) via the additional line (36), and the reference signal (42) is transmitted to the computation unit (8) via a reference line (44).

2. Method according to Claim 1, **characterized in that** the reference signal (42) and at least one further signal are connected together by the multiplexer (26) and are transmitted via the additional line (36).

3. Method according to Claim 1, **characterized in that** a potential of the circuit (6) and at least one further signal are connected together by the multiplexer (26) and are transmitted via the additional line (36).

4. Method according to one of the preceding claims, **characterized in that** the channels (001, 010, 011, 100) of the multiplexer (26) are selected via a serial interface (46).

5. Circuit arrangement having a circuit (6) and a computation unit (8), in which the circuit (6) and the computation unit (8) are connected to one another via a plurality of lines (10, 12, 14, 16) in order to transmit a number of information signals (18, 20, 22, 24), and in which the circuit (6) has a multiplexer (26) for connecting signals together, this multiplexer (26) being connected to the computation unit (8) via an additional line (36), the circuit arrangement having a line (10, 12, 14, 16) for each information signal (18, 20, 22, 24) to be transmitted, each line (10, 12, 14, 16) being connected to a channel of the multiplexer (26) via a branch line (28, 30, 32, 34), **characterized in that** the circuit (6) and the computation unit (8) are connected to one another using a reference line (44) for transmitting a signal in the form of a reference signal (42), and **in that** the computation unit has means for monitoring the information signals for channel-selective errors and for errors on a transmission path formed by the lines (10, 12, 14, 16) on the basis of the information signals (18, 20, 22, 24) connected together by the multiplexer (26) and for detecting errors which act on all channels (001, 010, 011, 100) of the multiplexer (26) on the basis of the reference signal (42) transmitted to the computation unit (8) via the reference line (44).

## Revendications

1. Procédé de surveillance des erreurs sur des signaux d'information (18, 20, 22, 24), dans lequel les signaux d'information (18, 20, 22, 24) sont transmis entre un circuit (6) et une unité de calcul (8) reliés l'un à l'autre par des conducteurs (10, 12, 14, 16) et dans lequel les signaux d'informations (18, 20, 22, 24) transmis sur un canal (001, 010, 011, 100) d'un multiplexeur (26) du circuit sont rassemblés dans le multiplexeur (26) et sont transmis par un conducteur supplémentaire (36) à l'unité de calcul (8), **caractérisé en ce que**
pour détecter des erreurs sélectivement sur chaque canal ainsi que des erreurs sur un parcours de transmission formé par les conducteurs (10, 12, 14, 16), les signaux d'information (18, 20, 22, 24) sont rassemblés par le multiplexeur (26) et sont transmis à l'unité de calcul (8) par le conducteur supplémentaire (36),
**en ce que** pour détecter des erreurs qui agissent sur tous les canaux (001, 010, 011, 100) du multiplexeur (26), un signal de référence (42) est transmis à un autre canal (111) du multiplexeur (26) et est transféré à l'unité de calcul (8) par le conducteur supplémentaire (36) et
**en ce que** le signal de référence (42) est transmis à l'unité de calcul (8) par un conducteur de référence (44).

2. Procédé selon la revendication 1, **caractérisé en ce que** le signal de référence (42) et au moins un autre signal sont rassemblés par le multiplexeur (26) et sont transmis par le conducteur supplémentaire (36).

3. Procédé selon la revendication 1, **caractérisé en ce qu'**un potentiel du circuit (6) et au moins un autre signal sont rassemblés par le multiplexeur (26) et sont transmis par le conducteur supplémentaire (36).

4. Procédé selon l'une des revendications qui précèdent, **caractérisé en ce que** les canaux (001, 010, 011, 100) du multiplexeur (26) sont sélectionnés par une interface série (46).

5. Ensemble de circuit qui présente un circuit (6) ainsi qu'une unité de calcul (8), le circuit (6) et l'unité de calcul (8) étant reliés l'un à l'autre par plusieurs conducteurs (10, 12, 14, 16) qui transmettent plusieurs signaux d'information (18, 20, 22, 24),
le circuit (6) présentant un multiplexeur (26) qui rassemble les signaux, ce multiplexeur (26) étant relié à l'unité de calcul (8) par un conducteur supplémentaire (36),
l'ensemble de circuit présentant un conducteur (10, 12, 14, 16) pour chacun des signaux d'informations (18, 20, 22, 24) à transmettre, chaque conducteur (10, 12, 14, 16) étant relié à un canal du multiplexeur (26) par un conducteur de dérivation (28, 30, 32, 34), **caractérisé en ce que**
le circuit (6) et l'unité de calcul (8) sont reliés l'un à l'autre par un conducteur de référence (44) qui transmet un signal configuré comme signal de référence (42),
**en ce que** l'unité de calcul présente des moyens qui, sur la base des signaux d'informations (18, 20, 22, 24) rassemblés par le multiplexeur (26), détectent les erreurs sur les signaux d'informations, sélectivement sur chaque canal ainsi que sur le parcours de transmission formé par les conducteurs (10, 12, 14, 16), et qui détectent les erreurs qui agissent sur tous les canaux (001, 010, 011, 100) du multiplexeur (26) par l'intermédiaire du signal de référence (42) transmis à l'unité de calcul (8) par le conducteur de référence (44).
